# EUROPÄISCHE PATENTSCHRIFT

(11) **EP 3 338 960 B1**
(45) Veröffentlichungstag und Bekanntmachung des Hinweises auf die Patenterteilung: **21.10.2020**
(21) Anmeldenummer: 17204688.0
(22) Anmeldetag: 30.11.2017
(51) Int. Cl.: B25F 5/02

(54) **HANDWERKZEUGMASCHINE**
HANDHELD MACHINE TOOL
MACHINE-OUTIL PORTATIVE

(30) Priorität: 22.12.2016 DE 102016125435
(43) Veröffentlichungstag der Anmeldung: 27.06.2018
(73) Patentinhaber: C. & E. Fein GmbH, 73529 Schwäbisch Gmünd-Bargau (DE)
(72) Erfinder: Karlovic, Ilija, 73529 Schwäbisch Gmünd (DE)

(56) Entgegenhaltungen:
- DE-A1- 3 638 952
- DE-A1-102013 212 907
- DE-U1-202013 105 442
- JP-A- H11 277 462
- US-A1- 2013 277 189
- US-A1- 2015 170 848

## Beschreibung

Die Erfindung betrifft eine Handwerkzeugmaschine mit einem Gehäuse, in dem ein Motor zum Antrieb eines Werkzeugs sowie ein Schalter zum Ein- und Ausschalten des Motors aufgenommen sind, mit einer Schalteinrichtung, die einen Schalterdrücker aufweist, der zwischen einer nicht aktivierten Stellung und einer aktivierten Stellung zur Betätigung des Schalters bewegbar ist, und mit einer Verriegelungseinrichtung, die zwischen einer Blockierstellung und eine Freigabestellung bewegbar ist, wobei der Schalterdrücker nur dann in die aktivierte Stellung bewegbar ist, wenn sich die Verriegelungseinrichtung in der Freigabestellung befindet, und wobei die Verriegelungseinrichtung in der aktivierten Stellung eine Verriegelung des Schalterdrückers in eine Verriegelungsstellung erlaubt

Eine derartige Handwerkzeugmaschine ist aus der EP 2 207 191 A2 bekannt.

Insbesondere bei Winkelschleifern ist es üblich, einen Schalterdrücker im hinteren Bereich des Gehäuses zu verwenden, der mit einer Hand ergriffen werden kann, um den Schalterdrücker zwischen einer nicht aktivierten und einer aktivierten Stellung zur Betätigung eines Schalters zum Ein- und Ausschalten des Motors bewegen zu können. Hierbei ist eine Verriegelungseinrichtung vorgesehen, die eine Betätigung des Schalterdrückers verhindert, solange sich die Verriegelungseinrichtung in einer Blockierstellung befindet. Um eine Bewegung des Schalterdrückers in die aktivierte Stellung zu erlauben, muss zuvor die Verriegelungseinrichtung in eine Freigabestellung bewegt werden.

Derartige Schalteinrichtungen sollen es verhindern, dass der Winkelschleifer unbeabsichtigt beim Ergreifen anläuft, ferner soll sich der Schalterdrücker beim Loslassen automatisch in seine nicht aktivierte Stellung bewegen, so dass der Motor ausgeschaltet wird und ggf. eine Bremse des Winkelschleifers betätigt wird. Sofern sich der Schalterdrücker in seiner aktivierten Stellung befindet und somit der Motor läuft, kann dieser ferner verriegelt werden, um eine erleichterte Handhabung des Winkelschleifers im längeren Betrieb zu erlauben.

Die zuvor genannte Handwerkzeugmaschine erfüllt diese Funktionen. In ähnlicher Weise funktioniert auch eine aus der EP 2 319 662 A1 bekannte Handwerkzeugmaschine.

Aus der US 2013/0277189 A1 ist zudem ein Schalter bekannt, dessen Verstellbarkeit durch einen Schieber gesteuert werden kann, der an dem Gehäuse verschiebbar gelagert ist. Hierdurch ist es bei der US 2013/0277189 A1 möglich, den Schalter im ausgeschalteten aber auch im eingeschalteten Zustand zu sperren.

Die DE 10 2013 212 907 A1 hingegen zeigt einen Schalter mit einer Blockiereinrichtung, mit der der Schalter im bestromten Zustand des Motors blockiert wird, während im unbestromten Zustand des Motors die Blockade des Schalters automatisch gelöst wird.

Bei den aus der JP H11 277462 A und der US 2015/170848 A1 bekannten Schaltern ist jeweils in dem Gehäuse eine Verriegelung für den Schalter integriert, mit der die Beweglichkeit dieses Schalters gesteuert werden kann.

Bei dem Schalter aus der DE 20 2013 105442 U1 wird ein in dem Gehäuse verschiebbar gelagerter Schieber verwendet, um die Laufrichtung des Motors zu verändern.

Bei der DE 36 38 952 A1 wird der ganze Schalter gegenüber dem Gehäuse verschoben, um diesen im eingeschalteten Zustand an dem Gehäuse zu arretieren, das zu diesem Zweck eine entsprechende Sicherungskontur aufweist.

Die Schalteinrichtungen bei den bekannten Handwerkzeugmaschinen sind relativ kompliziert aufgebaut und weisen eine relativ komplizierte Handhabung auf.

Vor diesem Hintergrund liegt der vorliegenden Erfindung die Aufgabe zugrunde, eine Handwerkzeugmaschine der vorstehend genannten Art derart zu verbessern, dass ein möglichst einfacher Aufbau und eine möglichst einfache Handhabung erreicht werden.

Diese Aufgabe wird bei einer Handwerkzeugmaschine der eingangs genannten Art erfindungsgemäß dadurch gelöst, dass die Verriegelungseinrichtung einen Schieber aufweist, der auf der Innenseite des Schalterdrücker zwischen der Blockierstellung und der Freigabestellung verschiebbar aufgenommen ist, dass am Schieber ein Blockierelement vorgesehen ist, das mit einem Gegenelement am Gehäuse zusammenwirkt, um in der Blockierstellung eine Bewegung des Schalterdrückers in die aktivierte Stellung zu blockieren und um bei Verschiebung des Schiebers in die Freigabestellung eine Bewegung des Schalterdrückers in die aktivierte Stellung zu erlauben, und dass am Schieber ein Verriegelungselement vorgesehen ist, das mit einer Aufnahme am Gehäuse zusammenwirkt, um in der aktivierten Stellung eine Verriegelung des Schalterdrückers in die Verriegelungsstellung zu erlauben.

Die Aufgabe der Erfindung wird auf diese Weise gelöst.

Während im Stand der Technik die mit dem Schalterdrücker zusammenwirkende Verriegelungseinrichtung einen gegen eine Federspannung verschwenkbaren Schaltknopf aufweist, mit Hilfe dessen die Blockierfunktion in der nicht aktivierten Stellung des Schalterdrückers gewährleistet wird und bei Betätigung dessen der Schalterdrücker in seine aktivierte Stellung bewegt werden kann, ist erfindungsgemäß eine Verriegelungseinrichtung mit einem Schieber am Schalterdrücker vorgesehen, der die Blockier- bzw. Freigabefunktion gewährleistet. Ferner ist mittels des Schiebers in der aktivierten Stellung eine Bewegung des Schalterdrückers in die Verriegelungsstellung ermöglicht, um eine Verriegelung des Schalterdrückers zu gewährleisten.

Auf diese Weise ergeben sich ein besonders einfacher und robuster Aufbau und eine leichte Bedienbarkeit.

Gemäß einem weiteren Merkmal der Erfindung ist der Schieber in die Blockierstellung vorgespannt.

Auf diese Weise ist gewährleistet, dass der Schieber in seiner Ausgangsstellung immer in der Blockierstellung ist, so dass der Schalterdrücker nicht ohne Weiteres betätigt werden kann.

Gemäß einem weiteren Merkmal der Erfindung ist der Schalterdrücker an einem Ende verschwenkbar gehalten und durch eine Feder in Richtung auf die nicht aktivierte Stellung vorgespannt.

Dies erlaubt eine einfache Betätigung des Schalterdrückers bei der Aktivierung und im Betrieb.

Gemäß einem weiteren Merkmal der Erfindung ist das Blockierelement als eine vom Schieber hervorstehende Stufe ausgebildet, die in der Blockierstellung an einem zugeordneten Vorsprung des Gehäuses anschlägt.

Auf diese Weise ist eine robuste Blockiermöglichkeit gewährleistet.

Gemäß einem weiteren Merkmal der Erfindung weist der Schieber ein Betätigungselement auf, das durch eine Ausnehmung des Schalterdrückers nach außen hervorsteht.

Auf diese Weise ist eine einfache Bewegung des Schiebers zwischen der Blockierstellung und der Freigabestellung ermöglicht.

Das Betätigungselement ist gemäß einem weiteren Merkmal der Erfindung als Knopf ausgebildet, der zur Verschiebung des Schiebers zwischen der Blockierstellung und der Freigabestellung mittels eines Fingers eines Benutzers ausgebildet ist.

Dies erlaubt eine sehr einfache Bedienung.

Gemäß einem weiteren Merkmal der Erfindung ist der Schieber mittels einer Feder in Richtung auf die Blockierstellung vorgespannt und das Verriegelungselement entgegen der Wirkung der Federspannung an der Aufnahme in die Verriegelungsstellung einrastbar.

Auf diese Weise ist eine einfache Verriegelung des Schalterdrückers in der aktivierten Stellung ermöglicht.

Gemäß einer Weiterbildung dieser Ausführung erlaubt die Schalteinrichtung in der Verriegelungsstellung des Schalterdrückers eine weitere Verschwenkung entgegen der Wirkung der Vorspannung der Feder in eine Entriegelungsposition, in der das Verriegelungselement von der Aufnahme freigegeben wird und durch die Feder in Richtung auf die Blockierstellung bewegbar ist.

Dies ist ein weiteres Sicherheitsmerkmal, da beim normalen Arbeiten mit der Maschine in der verriegelten Stellung des Schalterdrückers die Maschine an den Griff, an dem der Schalterdrücker aufgenommen ist, gehalten wird. Soll der Motor angehalten werden, so muss der Schalterdrücker lediglich um einen kleinen Betrag entgegen der Wirkung der Federkraft weiter zusammengedrückt werden, wodurch dann das Verriegelungselement unter der Wirkung der Vorspannung der zugeordneten Feder freigegeben wird. Beim anschließenden Loslassen des Schalterdrückers wird somit der Motor angehalten und ggf. eine zugeordnete Bremseinrichtung betätigt.

Gemäß einem weiteren Merkmal der Erfindung weist der Schalter einen Schalterstößel auf, der mittels des Schalterdrückers schaltbar ist, wenn der Schalterdrücker in seine aktivierte Stellung bewegt wird.

Dies erlaubt eine zuverlässige Schaltung des Schalters.

Gemäß einer weiteren Ausgestaltung der Erfindung ist der Schieber in einer Ausnehmung des Schalterdrückers von einer dem Gehäuse zugewandten Innenseite einlegbar und mit der Feder vorspannbar und zusammen mit dem Schalterdrücker zwischen zwei Gehäuseteilen montiert.

Auf diese Weise wird eine einfache Montage der Schalteinrichtung ermöglicht.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Fig. 1: eine perspektivische Ansicht einer erfindungsgemäßen Handwerkzeugmaschine, die beispielhaft als akkubetriebener Winkelschleifer ausgebildet ist;
- Fig. 2: einen Teil-Längsschnitt der Handwerkzeugmaschine gemäß Fig. 1 im Bereich der Schalteinrichtung, bei nicht betätigtem Schalterdrücker in der Blockierstellung;
- Fig. 3: den Teil-Längsschnitt der Handwerkzeugmaschine gemäß Fig. 1 im Bereich der Schalteinrichtung, wobei der Schieber jedoch in die Freigabestellung verschoben wurde;
- Fig. 4: den Teil-Längsschnitt der Handwerkzeugmaschine gemäß Fig. 1 im Bereich der Schalteinrichtung, wobei der Schalterdrücker jedoch aktiviert wurde;
- Fig. 5: den Teil-Längsschnitt der Handwerkzeugmaschine gemäß Fig. 1 im Bereich der Schalteinrichtung, wobei der Schalterdrücker aktiviert wurde und der Schieber in die verriegelte Stellung bewegt wurde;
- Fig. 6: einen Querschnitt durch die Handwerkzeugmaschine gemäß Fig. 4 längs der Linie VI-VI;
- Fig. 7: einen Querschnitt durch die Handwerkzeugmaschine gemäß Fig. 4 längs der Linie VII-VII;
- Fig. 8: eine perspektivische Ansicht eines Gehäuseteils von innen mit montierter Schalteinrichtung und
- Fig. 9: den Schalterdrücker mit montierter Verriegelungseinrichtung in perspektivischer Darstellung.

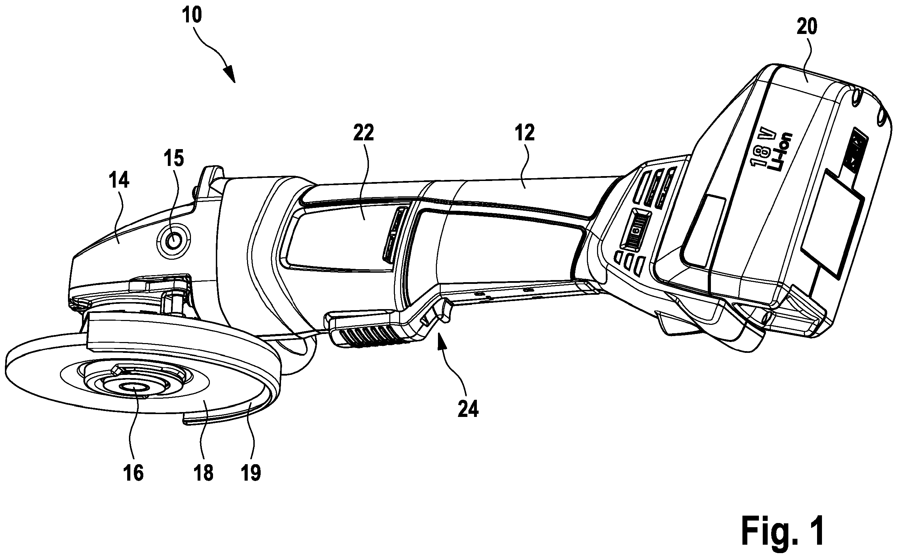

Die insgesamt mit 10 bezeichnete Handwerkzeugmaschine gemäß Fig. 1 weist ein längliches Gehäuse 12 auf, an dem die Handwerkzeugmaschine 10 mit einer Hand umgriffen werden kann. Im vorderen Bereich des Gehäuses 12 ist ein Motor aufgenommen, der hier lediglich mit der Ziffer 22 angedeutet ist. Am äußeren Ende des Gehäuses 12 ist ein Getriebekopf 14 vorgesehen, an dem auf beiden Seiten jeweils eine Aufnahme 15 zur Befestigung eines Stielhandgriffs vorgesehen ist. Aus dem Getriebekopf 14 steht eine Werkzeugspindel hervor, die hier lediglich mit 16 angedeutet ist. An der Werkzeugspindel 16 ist ein Werkzeug 18 in Form einer Schrupp- oder Trennscheibe lösbar befestigt, wobei ferner in bekannter Weise eine Schutzhaube 19 vorgesehen ist.

Am rückwärtigen Ende des Gehäuses 12 ist ein Akkumulator 20 lösbar befestigt. An der Unterseite des Gehäuses 12 ist eine insgesamt mit 24 bezeichnete Schalteinrichtung vorgesehen, mit der eine Betätigung des Motors 22 gesteuert wird.

Im Betrieb wird die Handwerkzeugmaschine typischerweise mit einer Hand an einem in die Aufnahme 15 auf der rechten oder linken Seite eingeschraubten Stielhandgriff gehalten und mit der anderen Hand durch Umgreifen des Gehäuses an seinem hinteren Ende, so dass die Schalteinrichtung 24 betätigt werden kann.

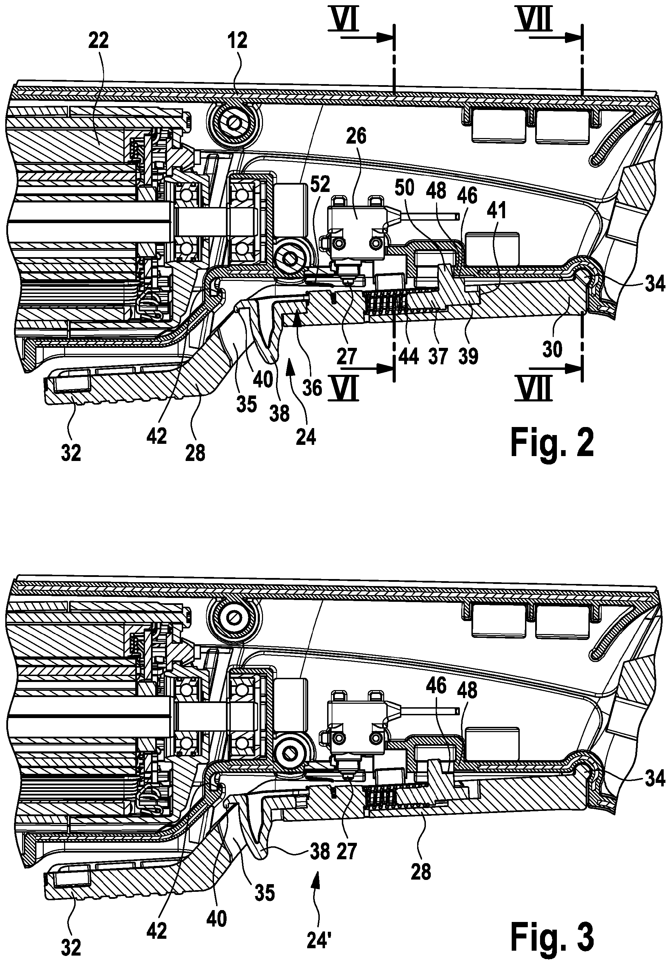

Der nähere Aufbau und die Funktion der Schalteinrichtung 24 werden im Folgenden anhand der Fig. 2 bis 9 näher beschrieben.

Die Schalteinrichtung 24 weist gemäß Fig. 2 einen Schalterdrücker 28 auf, der an einem ersten Ende 30 mittels einer Schwenkachse 34 am Gehäuse 12 gelagert ist. Der Schalterdrücker 28 ist um die Schwenkachse 34 verschwenkbar und mittels einer Feder 52 in seine nicht aktivierte Stellung nach außen hin vorgespannt, so dass sein zweites Ende 32 gemäß Fig. 2 in der nicht aktivierten Stellung nach außen hin absteht.

Innerhalb des Schalterdrückers 28 ist eine insgesamt mit 36 bezeichnete Verriegelungseinrichtung aufgenommen. Die Verriegelungseinrichtung 36 umfasst einen Schieber 37, der auf der Innenseite des Schalterdrückers 28 zwischen einer in Fig. 2 gezeigten Blockierstellung und einer Freigabestellung verschiebbar ist, in der der Schieber 37 nach vorn in Richtung zum Getriebekopf 14 hin verschoben ist. Der Schieber 37 weist an seinem vorderen, dem Getriebekopf 14 zugewandten Ende ein Betätigungselement 38 in Form eines im Querschnitt annähernd dreieckförmigen, abgerundeten Knopfes auf, der durch eine Ausnehmung 35 des Schalterdrückers 28 nach außen hervorsteht. Der Schieber 37 ist durch eine Feder 44 in seine Blockierstellung gemäß Fig. 2 vorgespannt, so dass der Schieber 37 in seiner Endstellung gehalten wird, in der der Schieber 37 mit seinem zweiten Ende 39 am Ende einer Ausnehmung 41 innerhalb des Schalterdrückers 28 anliegt.

In dieser Stellung steht ein Blockierelement 46, das als eine Stufe ausgebildet ist, die vom Schieber in Richtung auf das Innere des Gehäuses 12 hervorsteht, an einem zugeordneten Gegenelement 48 des Gehäuses 12 an. Somit ist in dieser Blockierstellung eine Bewegung des Schalterdrückers 28 durch eine Verschwenkung verhindert.

Innerhalb des Gehäuses 12 ist ein Schalter 26 aufgenommen, der zum Ein- und Ausschalten des Motors 22 ausgebildet ist. Der Schalter 26 weist einen Schalterstößel 27 auf, der in Richtung zum Schalterdrücker 28 aus dem Schalter 26 hervorsteht. Wird der Schalterdrücker 28 nach einer entsprechenden Bewegung der Verriegelungseinrichtung 36 in eine Freigabestellung (wie nachfolgend noch beschrieben wird) mit seinem zweiten Ende 32 in Richtung auf das Gehäuse 12 verschwenkt, so wird der Schalterstößel 27 durch die Unterseite des Schalterdrückers 28 betätigt, so dass der Schalter 26, der als Taster ausgebildet sein kann, in seine Einschaltstellung übergeht.

Wird der Schieber 37 durch Betätigung mittels eines Fingers am Betätigungselement 38 nach vorn in Richtung zum Getriebekopf 14 entgegen der Wirkung der Federkraft verschoben, so wird das Blockierelement 46 von seinem Gegenelement 48 freigegeben, so dass die insgesamt mit 24' bezeichnete Position der Schalteinrichtung gemäß Fig. 3 erreicht wird.

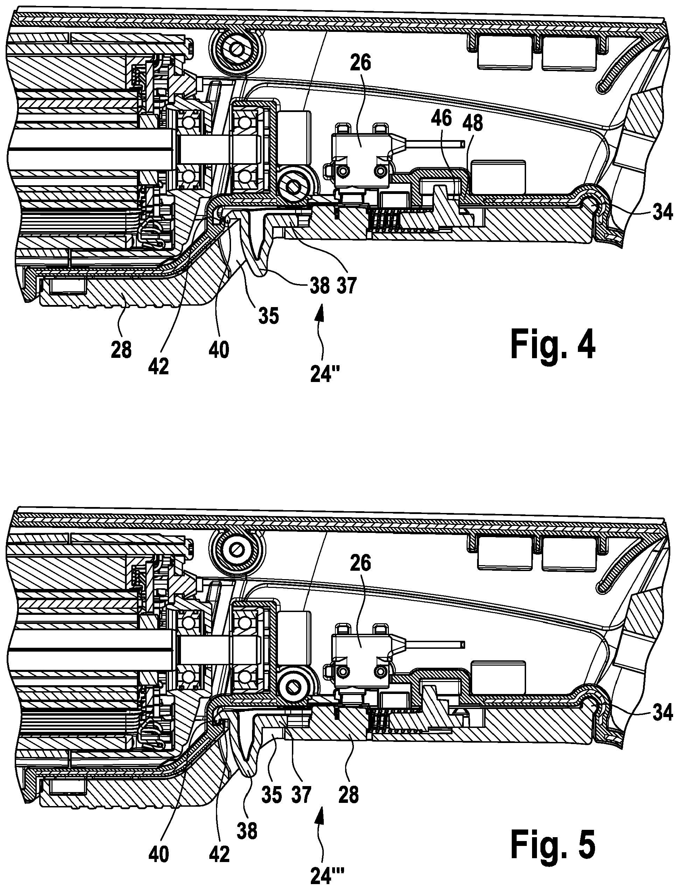

In dieser Position kann der Schalterdrücker 28 nunmehr in Richtung auf das Gehäuse 12 verschwenkt werden, so dass der Schalterstößel 27 betätigt wird und sich die Position gemäß Fig. 4 ergibt, die insgesamt mit 24" bezeichnet ist. Der Motor 22 wird somit eingeschaltet. Die Handwerkzeugmaschine 10 könnte nunmehr in dieser Position weiter gehalten werden, wobei der Motor 22 läuft, solange der Schalterdrücker 28 etwa durch Umgreifen mit einer Hand in der dargestellten aktivierten Position gehalten wird.

Die Schalteinrichtung 24 ist ferner jedoch auch dazu ausgebildet, eine Verriegelung des Schalterdrückers 24 in der aktivierten Stellung zu erlauben. Am vorderen Ende des Schiebers 37 ist ein Verriegelungselement 40 in Form einer Verriegelungsnase ausgebildet, der eine Aufnahme 42 am Gehäuse 12 zugeordnet ist.

Wird der Schieber 37 ausgehend von der Stellung gemäß Fig. 4 an seinem Betätigungselement 38 nach vorn in Richtung auf den Getriebekopf 14 verschoben, so verriegelt das Verriegelungselement 40 mit der Aufnahme 42 des Gehäuses 12 und hält somit den Schalterdrücker 28 in seiner aktivierten, eingeschalteten Position, so dass der Motor 22 in einer Verriegelungsstellung dauerhaft eingeschaltet ist. Es ergibt sich die Position gemäß Fig. 5, die mit 24''' angedeutet ist.

Soll der Motor 22 angehalten werden, so muss ausgehend von der Position gemäß Fig. 5 der Schalterdrücker 28 lediglich weiter entgegen der Wirkung der Spannung der Feder 52 angezogen werden, so dass das Verriegelungselement 40 aus der zugeordneten Aufnahme 42 des Gehäuses 12 wieder freigegeben wird und sich unter Wirkung der Spannung der Feder 44 wieder nach hinten in Richtung auf das erste Ende 30 des Schalterdrückers bewegt. Wird der Schalterdrücker 28 nunmehr losgelassen, so bewegt er sich unter der Wirkung der Feder 52 in seine nicht aktivierte Stellung, so dass der Motor 22 ausgeschaltet wird und ggf. zusätzlich eine Bremsung erfolgt. In dieser Position kann sich der Schieber 37 bis in seine Endstellung bewegen, so dass er wieder in seine Blockierstellung gelangt.

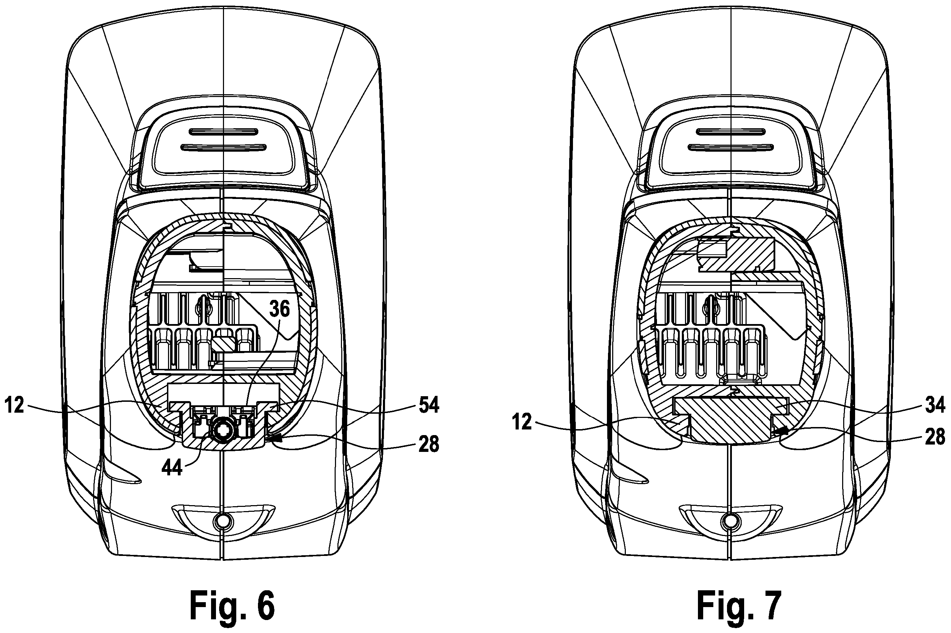

Die Schnitte gemäß der Fig. 6 und 7 zeigen, wie der Schalterdrücker 28 mit zwei seitlichen Vorsprüngen 54 in seiner nicht aktivierten Stellung am Gehäuse 12 gehalten ist bzw. wie der Schalterdrücker 28 mit seiner Schwenkachse 34 im Gehäuse 12 verschwenkbar gelagert ist.

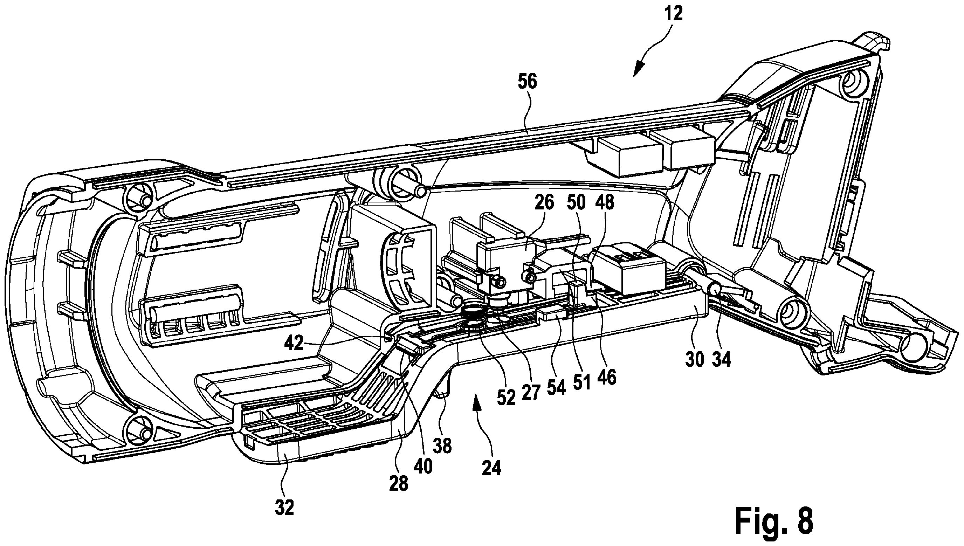

Aus Fig. 8 ist zu ersehen, dass am Schieber 50 angrenzend an das Blockierelement 46 ferner noch ein in Richtung auf das Gehäuseinnere hervorstehender Vorsprung 50 angeordnet ist, der innerhalb einer zugeordneten Ausnehmung 51 des Gehäuses 12 verschiebbar ist. Der Vorsprung 50 begrenzt somit die Verschiebung des Schiebers 37 zwischen der Blockierstellung und der Freigabestellung.

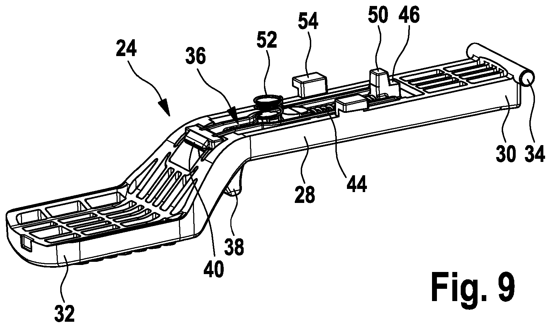

Zur Montage der Verriegelungseinrichtung 36 am Schalterdrücker 28 wird der Schieber 37 gemäß Fig. 9 wie in einem Schlüsselloch in die zugeordnete Ausnehmung 41 des Schalterdrückers 28 eingesetzt und mit der Feder 44 vorgespannt. Die Verriegelungseinrichtung ist nunmehr am Schalterdrücker 28 aufgenommen und kann am Gehäuse 12 montiert werden, bevor die beiden zugeordneten Gehäusehälften gemäß Fig. 8 zusammengefügt werden. In Fig. 8 ist lediglich eine Gehäusehälfte 56 dargestellt.

## Patentansprüche

1. Handwerkzeugmaschine mit einem Gehäuse (12), in dem ein Motor (22) zum Antrieb eines Werkzeugs (18) sowie ein Schalter (26) zum Ein- und Ausschalten des Motors (22) aufgenommen sind, mit einer Schalteinrichtung (24), die einen Schalterdrücker (28) aufweist, der zwischen einer nicht aktivierten Stellung und einer aktivierten Stellung zur Betätigung des Schalters (26) bewegbar ist, und mit einer Verriegelungseinrichtung (36), die zwischen einer Blockierstellung und einer Freigabestellung bewegbar ist, wobei der Schalterdrücker (28) nur dann in die aktivierte Stellung bewegbar ist, wenn sich die Verrieglungseinrichtung (36) in der Freigabestellung befindet, und wobei die Verriegelungseinrichtung (36) in der aktivierten Stellung eine Verriegelung des Schalterdrückers (28) in eine Verriegelungsstellung erlaubt, **dadurch gekennzeichnet, dass** die Verriegelungseinrichtung (36) einen Schieber (37) aufweist, der auf der Innenseite des Schalterdrückers (28) zwischen der Blockierstellung und der Freigabestellung verschiebbar aufgenommen ist, dass am Schieber (37) ein Blockierelement (46) vorgesehen ist, das mit einem Gegenelement (48) am Gehäuse (12) zusammenwirkt, um in der Blockierstellung eine Bewegung des Schalterdrückers (28) in die aktivierte Stellung zu blockieren und um bei Verschiebung des Schiebers (37) in die Freigabestellung eine Bewegung des Schalterdrückers (28) in die aktivierte Stellung zu erlauben, und dass am Schieber (37) ein Verriegelungselement (40) vorgesehen ist, das mit einer Aufnahme (42) am Gehäuse (12) zusammenwirkt, um in der aktivierten Stellung eine Verriegelung des Schalterdrückers (28) in die Verriegelungsstellung zu erlauben.

2. Handwerkzeugmaschine nach Anspruch 1, **dadurch gekennzeichnet, dass** der Schieber (37) in die Blockierstellung vorgespannt ist.

3. Handwerkzeugmaschine nach Anspruch 1 oder 2, **dadurch gekennzeichnet, dass** der Schalterdrücker (28) an einem Ende (30) verschwenkbar gehalten ist und durch eine Feder (52) in Richtung auf die nicht aktivierte Stellung vorgespannt ist.

4. Handwerkzeugmaschine nach einem der vorhergehenden Ansprüche, **dadurch gekennzeichnet, dass** das Blockierelement (46) als eine vom Schieber (37) hervorstehende Stufe ausgebildet ist, die in der Blockierstellung an einem zugeordneten Vorsprung (48) des Gehäuses (12) anschlägt.

5. Handwerkzeugmaschine nach einem der vorhergehenden Ansprüche, **dadurch gekennzeichnet, dass** der Schieber (37) ein Betätigungselement (38) aufweist, das durch eine Ausnehmung (35) des Schalterdrückers (28) nach außen hervorsteht.

6. Handwerkzeugmaschine nach Anspruch 5, **dadurch gekennzeichnet, dass** das Betätigungselement (38) als Knopf ausgebildet ist, der zur Verschiebung des Schiebers (37) zwischen der Blockierstellung und der Freigabestellung mittels eines Fingers eines Benutzers ausgebildet ist.

7. Handwerkzeugmaschine nach einem der vorhergehenden Ansprüche, **dadurch gekennzeichnet, dass** der Schieber (37) mittels einer Feder (44) in Richtung auf die Blockierstellung vorgespannt ist und dass das Verriegelungselement (40) in der aktivierten Stellung entgegen der Wirkung der Federspannung an der Aufnahme (42) in die Verriegelungsstellung einrastbar ist.

8. Handwerkzeugmaschine nach Anspruch 7, **dadurch gekennzeichnet, dass** die Schalteinrichtung (24) in der Verriegelungsstellung des Schalterdrückers (28) eine weitere Verschwenkung entgegen der Wirkung der Vorspannung der Feder (52) in eine Entriegelungsposition erlaubt, in der das Verriegelungselement (40) von der Aufnahme (42) freigegeben wird und durch die Feder (44) in Richtung auf die Blockierstellung bewegbar ist.

9. Handwerkzeugmaschine nach einem der vorhergehenden Ansprüche, **dadurch gekennzeichnet, dass** der Schalter (26) einen Schalterstößel (27) aufweist, der mittels des Schalterdrückers (28) schaltbar ist, wenn der Schalterdrücker (28) in seine aktivierte Stellung bewegt wird.

10. Handwerkzeugmaschine nach einem der vorhergehenden Ansprüche, **dadurch gekennzeichnet, dass** der Schieber (27) in eine Ausnehmung des Schalterdrückers (28) von einer dem Gehäuse (12) zugewandten Innenseite einlegbar und mit der Feder (44) vorspannbar ist und zusammen mit dem Schalterdrücker (28) zwischen zwei Gehäuseteilen (56) montiert ist.

## Claims

1. Handheld machine tool with a housing (12), in which a motor (22) for driving a tool (18), as well as a switch (26) for turning the motor (22) on and off, are accommodated, with a switching device (24), which has a pushbutton switch (28), which can be moved between a non-activated position and an activated position for operation of the switch (26), and with a locking device (36), which can be moved between a blocking position and a release position, wherein the pushbutton switch (28) can only be moved in the activated position when the locking device (36) is in the release position, and wherein the locking device (36) in the activated position allows the pushbutton switch (28) to be locked in a locking position, **characterised in that** the locking device (36) has a slider (37), which is accommodated on the inside of the pushbutton switch (28) and is movable between the blocking position and the release position, **in that** a blocking element (46) is provided on the slider (37), which engages with a counter-element (48) on the housing (12), in order to block a movement of the pushbutton switch (28) into the activated position in the blocking position and in order to allow a movement of the pushbutton switch (28) into the activated position when the slider (37) is moved into the release position, and **in that** a locking element (40) is provided on the slider (37), which engages with a fixture (42) on the housing (12), in order to allow the pushbutton switch (28) to be locked in the locking position in the activated position.

2. Handheld machine tool according to claim 1, **characterised in that** the slider (37) is pre-tensioned in the blocking position.

3. Handheld machine tool according to claim 1 or 2, **characterised in that** the pushbutton switch (28) is held pivotably at one end (30) and is pre-tensioned in the direction of the non-activated position by a spring (52).

4. Handheld machine tool according to any of the preceding claims, **characterised in that** the blocking element (46) is designed as a step protruding from the slider (37), which attaches to an associated projection (48) of the housing (12) in the blocking position.

5. Handheld machine tool according to any of the preceding claims, **characterised in that** the slider (37) has an actuating element (38), which projects outwards through a recess (35) in the pushbutton switch (28).

6. Handheld machine tool according to claim 5, **characterised in that** the actuating element (38) is designed as a button, which is designed to move the slider (37) between the blocking position and the release position when operated by a user's finger.

7. Handheld machine tool according to any of the preceding claims, **characterised in that** the slider (37) is pre-tensioned in the direction of the blocking position by means of a spring (44) and **in that**, in the activated position, the locking element (40) can be engaged with the fixture (42) counter to the effect of the spring tension into the locking position.

8. Handheld machine tool according to claim 7, **characterised in that**, with the pushbutton switch (28) in the locking position, the switching device (24) permits further pivoting counter to the effect of the spring (52) tension into a release position, in which the locking element (40) is released from the fixture (42) and can be moved in the direction of the blocking position by the spring (44).

9. Handheld machine tool according to any of the preceding claims, **characterised in that** the switch (26) has a switch plunger (27), which can be switched by means of the pushbutton switch (28), when the pushbutton switch (28) is moved into its activated position.

10. Handheld machine tool according to any of the preceding claims, **characterised in that** the slider (27) can be inserted into a recess in the pushbutton switch (28) from an inner side facing the housing (12) and can be pre-tensioned by means of the spring (44) and is mounted, together with the pushbutton switch (28), between two housing parts (56).

## Revendications

1. Machine-outil portative avec un boîtier (12), dans lequel un moteur (22) est reçu pour l'entraînement d'un outil (18) ainsi qu'un interrupteur (26) pour la mise en et hors circuit du moteur (22), avec un dispositif de commutation (24), qui présente une gâchette (28), qui est déplaçable entre une position non activée et une position activée pour l'actionnement de l'interrupteur (26), et avec un dispositif de verrouillage (36), qui est déplaçable entre une position de blocage et une position de libération, dans laquelle la gâchette (28) est déplaçable dans la position activée uniquement lorsque le dispositif de verrouillage (36) se trouve dans la position de libération, et dans laquelle le dispositif de verrouillage (36) dans la position activée permet un verrouillage de la gâchette (28) dans une position de verrouillage, **caractérisée en ce que** le dispositif de verrouillage (36) présente un coulisseau (37), qui est reçu coulissant sur le côté intérieur de la gâchette (28) entre la position de blocage et la position de libération, qu'un élément de blocage (46) est prévu au niveau du coulisseau (37), qui coopère avec un contre-élément (48) au niveau du boîtier (12) pour bloquer dans la position de blocage un déplacement de la gâchette (28) dans la position activée et pour permettre lors du coulissement du coulisseau (37) dans la position de libération un déplacement de la gâchette (28) dans la position activée, et qu'un élément de verrouillage (40) est prévu au niveau du coulisseau (37), qui coopère avec un logement (42) au niveau du boîtier (12) pour permettre dans la position activée un verrouillage de la gâchette (28) dans la position de verrouillage.

2. Machine-outil portative selon la revendication 1, **caractérisée en ce que** le coulisseau (37) est précontraint dans la position de blocage.

3. Machine-outil portative selon la revendication 1 ou 2, **caractérisée en ce que** la gâchette (28) est maintenue pivotante à une extrémité (30) et est précontrainte par un ressort (52) en direction de la position non activée.

4. Machine-outil portative selon l'une quelconque des revendications précédentes, **caractérisée en ce que** l'élément de blocage (46) est réalisé en tant que gradin faisant saillie du coulisseau (37), qui bute dans la position de blocage au niveau d'une saillie (48) associée du boîtier (12).

5. Machine-outil portative selon l'une quelconque des revendications précédentes, **caractérisée en ce que** le coulisseau (37) présente un élément d'actionnement (38), qui fait saillie vers l'extérieur par un évidement (35) de la gâchette (28).

6. Machine-outil portative selon la revendication 5, **caractérisée en ce que** l'élément d'actionnement (38) est réalisé en tant que bouton, qui est réalisé pour le coulissement du coulisseau (37) entre la position de blocage et la position de libération au moyen d'un doigt d'un utilisateur.

7. Machine-outil portative selon l'une quelconque des revendications précédentes, **caractérisée en ce que** le coulisseau (37) est précontraint au moyen d'un ressort (44) en direction de la position de blocage et que l'élément de verrouillage (40) dans la position activée peut s'enclencher contre l'effet de la tension de ressort au niveau du logement (42) dans la position de verrouillage.

8. Machine-outil portative selon la revendication 7, **caractérisée en ce que** le dispositif de commutation (24) dans la position de verrouillage de la gâchette (28) permet un autre pivotement contre l'effet de la précontrainte du ressort (52) dans une position de déverrouillage, dans laquelle l'élément de verrouillage (40) est libéré du logement (42) et est déplaçable par le ressort (44) en direction de la position de blocage.

9. Machine-outil portative selon l'une quelconque des revendications précédentes, **caractérisée en ce que** l'interrupteur (26) présente un poussoir d'interrupteur (27), qui est commutable au moyen de la gâchette (28), lorsque la gâchette (28) est déplacée dans sa position activée.

10. Machine-outil portative selon l'une quelconque des revendications précédentes, **caractérisée en ce que** le coulisseau (27) peut être inséré dans un évidement de la gâchette (28) depuis un côté intérieur tourné vers le boîtier (12) et être précontraint avec le ressort (44) et est monté conjointement avec la gâchette (28) entre deux parties de boîtier (56).
